# EUROPEAN PATENT APPLICATION

(11) **EP 2 484 786 A1**
(43) Date of publication of application: **08.08.2012**
(21) Application number: 10820461.1
(22) Date of filing: 24.09.2010
(51) Int. Cl.: C22B 1/243, C21B 13/10, C22B 1/16, C22B 1/244, C22B 5/16, C22B 7/02, C22B 13/02, C22B 19/30

(54) **METHOD FOR PRODUCING BRIQUETTES, METHOD FOR PRODUCING REDUCED METAL, AND METHOD FOR SEPARATING ZINC OR LEAD**

(30) Priority: 29.09.2009 JP 2009225053
(71) Applicant: Kabushiki Kaisha Kobe Seiko Sho, Kobe-shi, Hyogo 651-8585 (JP)
(72) Inventor: MIZUTANI, Noriaki, Kobe - shi Hyogo 651 - 8585 (JP); HARADA, Takao, Kobe - shi Hyogo 651 - 8585 (JP); MICHISHITA, Haruyasu, Kobe - shi Hyogo 651 - 8585 (JP); MIYAKAWA, YUTAKA, Kobe - shi Hyogo 651 - 8585 (JP); FUJI, Kojiro, Kobe - shi Hyogo 651 - 8585 (JP)
(74) Representative: Müller-Boré & Partner Patentanwälte
(86) International application number: PCT/JP2010/066606
(87) International publication number: WO 2011/040344

(57) **Abstract**

Disclosed is a method for producing briquettes, by which briquettes having enhanced strength can be produced even when the amount of a binder used therefor is reduced as much as possible. Specifically disclosed is a method for producing briquettes, which comprises: a step of forming a primary granular material having an apparent density of 1,000 to 4,000 kg/m³ using a powder of metal oxides including iron oxide and one or more oxides selected from among of zinc oxide, lead oxide, and titanium oxide; and a step of forming a secondary granular material by compressing a plurality of primary granular materials, while having the primary granular materials contain one or more metal oxides selected from among the zinc oxide, lead oxide, and titanium oxide.

## Description

### Technical Field

The present invention relates to a method for producing agglomerates (briquettes) using dust raw materials containing metal oxides (particularly iron oxide) and can be applied to a method for producing a reduced metal from the resultant agglomerates and to a method for separating and recovering volatile metals such as zinc, lead, and the like.

### Background Art

Although iron ore raw materials are, of course, used as raw materials for producing reduced iron, recycling of dust containing iron raw materials, which is produced in iron mills, attracts attention because of the recent price increases with increases in demand for iron ore raw materials. In pig iron making or steel making processes, dust containing powdery iron and iron oxide blown up in a blast furnace, a converter, a melting furnace, etc. is recovered with a dust collector. The recovered powder (hereinafter referred to as the "steel making dust") contains iron and iron oxide and is thus used as an iron raw material. Although there are various types of steel making dust, steel making dust solidified in gas after being evaporated from molten steel and electric furnace dust (electric dust) generated from electric furnaces have a small grain diameter of as small as several µm.

In a rotary hearth furnace which is one of equipments for producing reduced iron, in order to effect a uniform reductive reaction, it is necessary to supply, as agglomerates, a raw material containing metal oxides and a carbonaceous material and to impart certain strength to the agglomerates. However, when a carbonaceous material is contained, a method for enhancing strength of agglomerates by sintering cannot be used because carbon is burnt even at a relatively low temperature. Therefore, the strength of agglomerates is enhanced by using an expensive bonding agent (may be referred to as a "binder" hereinafter) such as starch or molasses.

The reason for enhancing the strength of agglomerates is as follows. The agglomerates having low strength cause operational problems (1) that the plant operating ratio is decreased due to difficulty in storage of the agglomerates, (2) yield is decreased due to powdering of the agglomerates, (3) the performance of reduction treatment of the powered agglomerates is decreased due to low reactivity, and (4) the strength of a reduced metal (reduced iron: DRI) produced by reducing the agglomerates is decreased, and thus the reduced metal is unsuitable for a shaft furnace type, such as a blast furnace, and a melting process, which require high-strength DRI, thereby limiting the application of DRI.

In general, either a pellet producing apparatus or a briquette producing apparatus is used as an apparatus for producing agglomerates, and it is necessary for any one of the apparatuses to produce agglomerates having as a uniform size and high.strength as possible. However, it is very difficult to produce agglomerates of fine powder raw materials for the following two main reasons. One of the reasons is that it is difficult to produce agglomerates having strength because a fine powder dust material has a low bulk density and many voids. If agglomerates have low strength, the agglomerates may be broken by pressure and thus cannot be stored in a large amount or cause cracking or the like during transport. The other reason is that a fine powder raw material is mixed with a binder in order to enhance the strength of agglomerates, but it is difficult to uniformly mix the binder. This is because the binder has an adhesive function and thus has viscosity which inhibits uniform mixing. In addition, a binder material is expensive, and the binder has an adhesive function and thus causes material clogging during production or a supply process (for example, an intermediate hopper) of the agglomerates. The material clogging stops the supply of the raw material to a rotary hearth furnace or the like or abruptly causes the supply of a large amount, thereby destabilizing the operation of a reducing furnace. Therefore, it is desired to minimize the amount of binder used.

A method for producing pellets of a fine powder dust material and a method for producing briquettes, which are conventionally known, are described below by way of examples.

Patent Literature 1 describes, as shown in Fig. 1 of the patent literature, a known method of kneading raw materials discharged from raw material storing tanks with a kneading device and producing pellets with a pan-type granulator using, as a raw material, grains containing metal oxides and carbon. In detail, a plurality of raw materials are discharged at a predetermined mixing ratio on a raw material conveyor from a plurality of raw material storing bottles. The grain diameter of the raw material, chemical components, and the mixing ratio of contained water are determined. In particular, in order to perform a proper reductive reaction, the ratio of the metal oxides to carbon is adjusted.

Patent Literature 2 describes a method for producing a solid from steel-making dust as shown in Fig. 1 of this patent literature. As shown in this figure, this system includes a granulation step of mixing dust which contains, as main components, iron and oxide thereof produced in a steel production process with a powder which contains carbon as a main component and then granulating the resultant mixture to form pellets, a water impregnating step of impregnating the mixed granulated material with water, a solidification step of forming briquettes by pressuring the pellets impregnated with water in a die, a step of transferring the briquettes as a raw material of a melting furnace, and a dezincification step of concentrating zinc in the dust during the time from the melting furnace to the solidification step and dezincifying the dust in a concentrated state. Further, this method is capable of softening the surface of the mixed granulated material by impregnating with water immediately before briquetting and facilitating deformation of the granulated material during briquetting, thereby enhancing the adhesive strength between granulated materials.

### Citation List

### Patent Literature

PTL 1: Japanese Unexamined Patent Application Publication No. 2002-206120
PTL 2: Japanese Unexamined Patent Application Publication No. 2007-270229

### Summary of Invention

### Technical Problem

Since a reducing furnace is required to perform a uniform reductive reaction, agglomerates to be supplied to the reducing furnace are required to have uniformity in size. This is because when the agglomerates have variation in size, the reductive reaction is not uniform, and thus quality of reduced iron is significantly decreased. In Patent Literature 1, as shown in Fig. 1, the pellets are classified with a pellet sieve device in order to maintain uniformity required for the reducing furnace. However, of course, the supply efficiency of pellets is worsened by the pellet sieve device, and the pellet sieve device has cost demerit.

In the method of Patent Literature 2, briquettes are formed. Briquettes have higher uniformity than pellets and can be formed as large agglomerates. However, the briquettes are produced by pressing together raw materials by compression, and thus a binder is generally required as described above. The method of Patent Literature 2 includes impregnating with water immediately before briquetting in order to minimize the amount of the binder used, but it is actually difficult to uniformly entirely impregnate a pellet aggregate with water. If a portion without water adhering thereto remains, the surface of the mixed granulated material cannot be softened in this portion, thereby failing to enhance the strength of the briquettes as a whole. In addition, the water drying time after briquetting is elongated.

In addition, an iron ore, blast furnace dust, or steel-making dust generally has coarse grains and thus has difficulty in granulation or briquetting, resulting in the use of a large amount of binder. On the other hand, electric furnace dust contains ultrafine grains, and a raw material contains a large amount of air and is not easily briquetted. In addition, ultrafine grains have a large specific surface area and are thus not easily compacted, resulting in an increase in the amount of the binder used. Although Patent Literature 1 describes the method for forming pellets using a fine grain raw material, the formed pellets tend to have low strength because the ultrafine grain raw material has a low apparent density. Therefore, after all, the amount of the binder used is inevitably increased for enhancing strength. In consideration of this situation, an object of the present invention is to produce briquettes with strength which can be enhanced even by decreasing the amount of binder used.

### Solution to Problem

The present invention has the following aspects.
[1] A method for producing briquettes, the method including a step of forming a primary granular material with an apparent density of 1,000 to 4,000 kg/m³ using a powder of metal oxides including iron oxide and at least one of zinc oxide, lead oxide, and titanium oxide, and a step of forming a secondary granular material by pressing a plurality of primary granular materials under a condition where the primary granular materials contain at least one of zinc oxide, lead oxide, and titanium oxide.
[2] The method for producing briquettes described in [1], wherein the primary granular material is formed by tumbling granulation, kneading granulation, or pressure compaction.
[3] The method for producing briquettes described in [1] or [2], wherein the total content of at least one of the zinc oxide, lead oxide, and titanium oxide is 10% by mass or more of the secondary granular material.
[4] The method for producing briquettes described in any one of [1] to [3], wherein the primary granular material contains a reducing agent.
[5] The method for producing briquettes described in any one of [1] to [4], wherein the primary granular material contains water.
[6] The method for producing briquettes described in [5], wherein the primary granular material is pressed at a water content of 4 to 20% by mass.
[7] The method for producing briquettes described in [5] or [6], further including a step of drying the primary granular material before forming the secondary granular material.
[8] The method for producing briquettes described in [7], wherein the water content of the primary granular material is decreased by drying to 50% to 95% by mass of that before drying.
[9] The method for producing briquettes described in any one of [2] to [8], wherein the primary granular material is formed by allowing the metal oxides to stay in a tumbling granulator for 15 seconds or more.
[10] The method for producing briquettes described in any one of [1] to [9], further including a step of drying the secondary granular material.
[11] The method for producing briquettes described in any one of [1] to [10], wherein the volume of the primary granular material is 1/500 or more of the inner volume of a die for forming the secondary granular material.
[12] A method for producing a reduced metal including a step of reducing briquettes produced by the method for producing briquettes described in any one of [1] to [11].
[13] A method for separating zinc, the method including a step of evaporating zinc by heating and reduction of briquettes which contain zinc oxide and produced by the method for producing briquettes described in any one of [1] to [11].
[14] A method for separating lead, the method including a step of evaporating lead by heating or heating and reduction of briquettes which contain lead oxide and produced by the method for producing briquettes described in any one of [1] to [11].

In the method for separating zinc, both heating and reduction are required because zinc oxide has a low saturation vapor pressure and is thus little evaporated only by heating and is required to be reduced.

### Advantageous Effects of Invention

According to the present invention, at least one of zinc oxide, lead oxide, and titanium oxide is contained in metal oxides, and thus at least one of zinc oxide, lead oxide, and titanium oxide functions as a binder of a raw material containing the metal oxides, thereby eliminating the need to use a large amount of a binder such as molasses before forming the secondary granular material. This permits the secondary granular material with high strength to be efficiently produced without complicating the equipment. In addition, the apparent density of the primary granular material is enhanced, and thus the raw material is sufficiently compacted by subsequent pressure compaction, thereby increasing the strength of the secondary granular material.

### Brief Description of Drawings

[Fig. 1] Fig. 1 is a drawing of a process according to an embodiment of the present invention.
[Fig. 2] Fig. 2 is a drawing showing an example of equipment for carrying out the process.
[Fig. 3] Figs. 3(a) and 3(b) are graphs each showing a grain size distribution of electric furnace dust used in examples of the present invention.

### Description of Embodiments

The inventors found that when a material such as zinc oxide, lead oxide, and titanium oxide, which are used as pigments for paints and the like, are contained in a powder of metal oxides, they function as a binder of the metal oxides and enhance the strength of a formed secondary granular material (briquettes) without mixing a large amount of binder. It was also found that when the content of zinc oxide or the like is appropriately adjusted, strength can be sufficiently improved without drying of the briquettes after briquetting.

In addition, a pan-type pelletizer or a drum-type pelletizer is generally used as a granulator for producing a primary granular material (pellets). By using either of the granulators, the resultant pellets have a relatively wide grain size distribution due to the granulation principle. As described in Patent Literature 1, when pellets are formed by the pan-type pelletizer, an apparatus which classifies the formed pellets into a plurality of predetermined grain size ranges is generally required. However, as a result of intensive research, the inventors found that after the formation of pellets, the pellets are further pressed to be briquetted, so that smaller pellet grains enter the spaces between larger pellet grains, thereby contributing to an increase in density of the briquettes due to variation of pellet diameters. This resulted in the completion of the present invention.

A method for producing briquettes of the present invention includes (1) a step of forming a primary granular material with an apparent density of 1,000 to 4,000 kg/cm³ using a powder containing metal oxides and at least one of zinc oxide, lead oxide, and titanium oxide, and (2) a step of pressing a plurality of primary granular materials to form a secondary granular material under a condition where the primary granular materials contain at least one of zinc oxide, lead oxide, and titanium oxide.

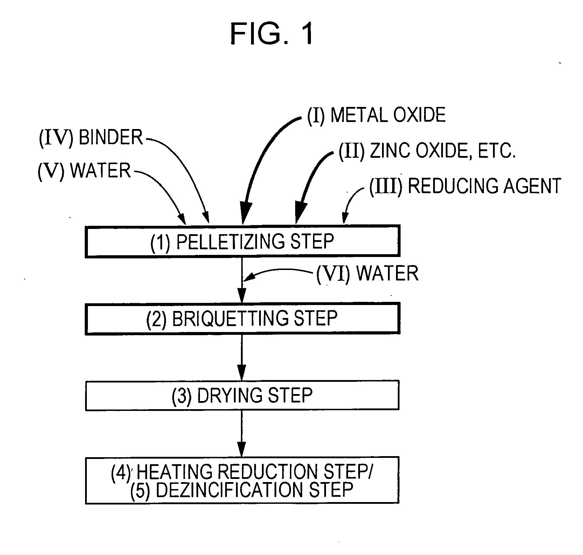

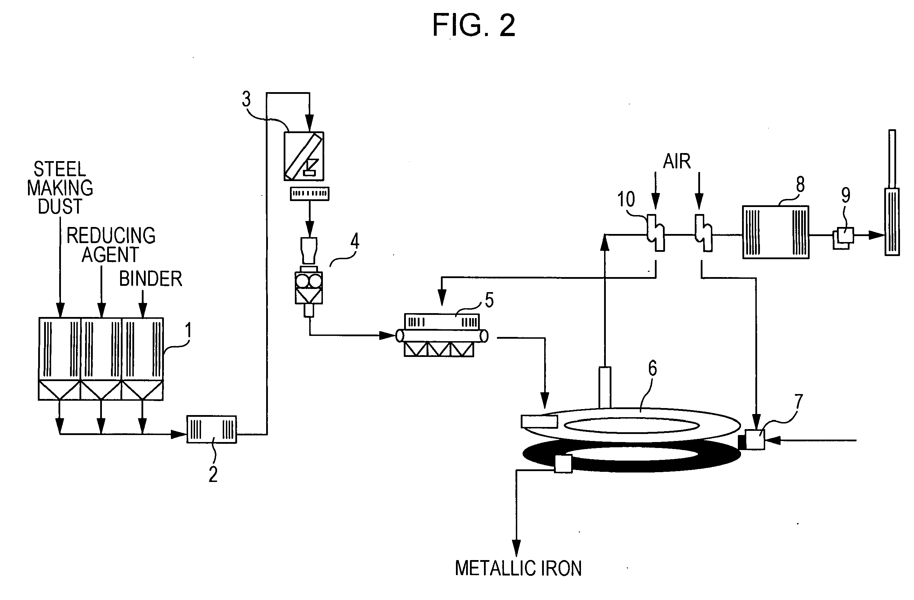

Examples of the method for forming the primary granular material include a tumbling granulation method, a kneading granulation method, and a pressure compaction method. Here, the primary granular material formed by the tumbling granulation may be referred to as "pellets", and the secondary granular material formed by pressure compaction may be referred to as "briquettes". An embodiment of the present invention is described below by mainly describing (1) the pellet forming step, and (2) the briquetting step. Fig. 1 is a drawing of a process according to an embodiment of the present invention, and Fig. 2 is a drawing showing an example of equipment for carrying out the process.

### 1. Process

As shown in Fig. 1, (1) pellets having an apparent density of 1,000 to 4,000 kg/m³ are formed from a mixture prepared by mixing proper amounts of a metal oxide (I), at least one of zinc oxide, lead oxide, and titanium oxide (II), and, if required, a reducing agent (III), a binder (IV), and water (V). Since the bulk density of a raw material during pressure compaction described below is increased by increasing the apparent density, the raw material is sufficiently compacted, and thus intermolecular force of the raw material is increased to increase the strength of the briquettes. Next, after the water (VI) is further added according to demand, (2) the briquettes are formed by compression in a state of containing at least one of zinc oxide, lead oxide, and titanium oxide. Further, if required, (3) the briquettes are dried. Then, (4) a reduced metal can be produced by supplying the resultant briquettes to a reducing furnace. (5) When the supplied briquettes contain zinc and/or lead, zinc and/or lead can be recovered from the briquettes by heating/heating and reduction in the reducing furnace.

### (I) Metal oxide

Since the metal oxides include iron oxide, reduced iron can be produced by reducing the formed briquettes containing iron oxide in the reducing furnace. As the iron oxide, a sintered ore and an iron ore for pellets (pellet feed) can be used, and steel-making dust can also be used. As the steel-making dust, various types of dust, which are generated from various sources and have various forms, such as dust produced by solidification in gas after evaporation from molten steel, electric furnace dust generated from an electric furnace, and the like, can be used.

### (II) At least one of zinc oxide, lead oxide, and titanium oxide

When the metal oxides include zinc oxide, lead oxide, and titanium oxide, which are used as pigments for paints, they function as a binder of the metal oxides, thereby improving the strength of the formed briquettes without mixing a binder and water. An improvement in strength of the briquettes brings about various effects. For example, when the briquettes are reduced, the briquettes are hardly powdered even in the reduction step, thereby improving a reduction rate (generation rate of reduced metal) of the metal oxides. In addition, when volatile metals such as zinc and lead contained in the briquettes are recovered, the recovery rate and purity are improved. Further, mixing and deaeration of materials are promoted during pelletization, and thus an expensive mixing machine having a kneading function is not required for pelletizing the metal oxides.

In the present invention, for the above-described reasons, at least one of zinc oxide, lead oxide, and titanium oxide is contained in the metal oxides. The above-described steel-making dust usually contains metals such as zinc oxide derived from galvanized steel or the like, the amounts thereof depending on the type of dust source.

In addition, a more secured bonding function is exhibited by appropriately adjusting the total content of zinc oxide, lead oxide, and titanium oxide in the primary granular material. As a specified adjustment method, the total content of zinc oxide, lead oxide, and titanium oxide can be adjusted by mixing appropriate amounts of steel-making dust generated from different sources because as described above, the concentration of zinc oxide contained varies with the type of the dust source. The total content of zinc oxide, lead oxide, and titanium oxide is, for example, 10% by mass or more, more preferably 15% by mass or more, still more preferably 20% by mass or more. On the other hand, the total content of zinc oxide, lead oxide, and titanium oxide is not particularly limited, but is, for example, 60% by mass or less, more preferably 50% by mass or less, in view of a range where they can be industrially used.

### (III) Reducing agent

When the metal oxides are reduced by supplying the formed briquettes to a moving reduction furnace, for example, a rotary hearth furnace, a reducing agent necessary for reductive reaction is mixed in the step of forming pellets. As the reducing agent, for example, carbon-containing materials such as coal, brown coal, anthracite coal, coke breeze, steel-making dust containing a carbonaceous material, plastic, and wood dust can be used. From the viewpoint of maintaining strength of the briquettes, in general, a reducing agent with a low volatile content is preferably used. However, the method for producing briquettes of the present invention can use coal having a high volatile content because the strength of the briquettes is enhanced.

In addition, the method of the present invention is effective in a case where besides the reducing agent, a regulator (coal, dolomite, or the like) necessary for a melting furnace is previously mixed.

### (IV) Binder

In order to improve the strength of the pellets, an appropriate amount of binder, such as starch or molasses, may be mixed according to demand.

### (V) Water (before and during the pelletizing step)

In order to improve the strength of the pellets, an appropriate amount of water may be mixed according to demand. Before pelletizing and during the pelletizing step, water can be relatively easily and uniformly mixed. In addition, the effect of decreasing the amount of the binder used is exhibited.

### (VI) Water (before briquetting)

In the present invention, since any one of zinc oxide, lead oxide, and titanium oxide functions as the binder as described above, it is basically not necessary to add water before briquetting. However, when the reducing agent is mixed with the pellets, in a practicable mode, water may be, of course, added as an auxiliary according to the amount and type of the reducing agent.

In addition, regardless of whether water is added to the pellets in a step before pelletizing, during pelletizing, or before briquetting, it is preferred to form the briquettes by pressing, i.e., pressure-compacting, the pellets at a pellet water content of 4 to 20% by mass (may be simply described as "%" hereinafter). This is because the strength of the briquettes can be improved by pressure-compacting the pellets containing water. In order to effectively exhibit this effect, the water content of the pellets is preferably 4% or more, more preferably 6% or more, still more preferably 8% or more, and most preferably 9% or more. However, at an excessively high water content, the pellets adhere to the inside of the briquette production apparatus, resulting in the stoppage of the briquette production apparatus in some cases. In order to prevent this problem, the water content is, for example, 20% or less, preferably 18% or less, and more preferably 15% or less.

Drying of the briquettes is not an essential requirement of the present invention, but the strength of the briquettes can be further enhanced by drying. Enhancement in strength can prevent powdering due to breakage after the briquetting step and surface viscosity can be suppressed by drying. Therefore, a large amount of briquettes as an intermediate product can be stored in a storage house for bottles or piles. The drying method may be any one of heat drying, through-flow drying, and air drying (so-called curing) methods, but when the briquettes contain carbon, it is important for the briquettes to be at a temperature where carbon does not spontaneously ignite.

Although the method for producing briquettes of the present invention is described above, it is desired to dry the pellets before briquetting. This is because the pellets having dry surfaces little adhere to the inside of the briquette production apparatus when being supplied to the apparatus. As a possible drying method, forced drying or air drying (for example, 4 hours, preferably 1 day or more) can be used. Even with the pellets having dry surfaces, the water present in the pellets is dispersed over the entirety during briquetting, thereby contributing to an improvement in strength of the briquettes. The degree of drying is such that the water content of the pellets is 50% to 95% of that before drying. The reason for determining the water content to 95% or less is to effectively achieve the effect of preventing adhesion to the briquette production apparatus, and the water content is more preferably 90% or less. On the other hand, the reason for determining the water content to 50% or more is to maintain the strength of the briquettes to some extent, and the water content is more preferably 70% or more. The pellet water content used as an index which indicates the degree of drying is measured for the whole of the pellets, not for a portion of the pellets, such as the surfaces or the insides thereof.

### 2. Equipment example

Next, an example of equipment according to an embodiment of the present invention is described on the basis of Fig. 2. The equipment described below is only an example, and the method for producing briquettes of the present invention is not limited to the function of the equipment described below.

As shown in Fig. 2, steel-making dust, a reducing agent, and a binder are stored in respective three storage houses 1. The materials discharged from the storage houses 1 are mixed in a mixer 2 and then supplied to a pan-type granulator 3 serving as a tumbling granulator. As described in Patent Literature 1, the pan-type granulator 3 includes a Chinese work-like shaped rotating pan having a diameter of 2 to 6 m. The pan is inclined at about 45 degrees, and the steel-making dust containing water and the reducing agent tumble in the pan to grow pellets while dredging the produced nuclei newly with a powder raw material. The grown pellets are moved to an upper side in the pan as the size of the pellets increases, and the pellets moved to the outermost surface of the raw material tumble down the surface by their own weight and separate from the pan. The time required from the supply of the raw material to the pan to the separation from the pan, i.e., the retention time, can be controlled by adjusting the size of the pan and the rotational angle, the rotational speed, etc. of the pan, and the time is preferably 15 seconds or more (preferably 30 seconds or more, more preferably 45 seconds or more). With a short retention time, the powder raw material is not densely formed in a layer around each of the nuclei, and thus the apparent density of the pellets may not be increased. In the present invention, the strength (particularly, drop strength) of the briquettes is improved by controlling the apparent density of the pellets to 1,000 kg/m³ or more. The apparent density of the pellets is more preferably 1,500 kg/m³ or more, and still more preferably 2,000 kg/m³ or more. On the other hand, the upper limit of the apparent density of the pellets is not particularly limited, but is, for example, 4,000 kg/m³ or less in view of production efficiency in real operation. The apparent density of the pellets and the apparent density of the briquettes can be measured according to the measurement method specified in JIS M8719 "Iron Ore Pellets - Determination of Volume".

The material formed in a pellet shape is inserted into a briquette apparatus 4. In order to prevent powdering of the pellets, a vibrating feeder or a vibrating conveyor rather than a screw feeder in common use is preferably used for transferring the pellets from the pan-type granulator 3 to the briquette apparatus 4. In addition, the pellets produced by the pan-type granulator 3 may be transported to the briquette apparatus 4 by trucking or the like. This is because in view of equipment economy, the pellets produced at a plurality of spots are accumulated to form briquettes.

In the briquette apparatus 4, the pellet material is solidified (briquetted) by pressure-compression with two rollers having recessed portions and sequentially discharged as briquettes.

In addition, the volume of the primary granular material such as the pellets is preferably 1/500 or more of the inner volume of a die (generally referred to as a "pocket") for forming briquettes. This is because when the volume is less than 1/500, the contact area between the briquettes and the inner wall of the pocket is excessively increased, thereby increasing adhesion to the inner wall of the pocket. The upper limit of the briquette volume is not particularly limited, but is practically equal to or smaller than the inner volume of the pocket.

The pellets inserted into the briquette apparatus 4 have the following two characteristics.

### (1) In a state of containing at least one of zinc oxide, lead oxide, and titanium oxide

The pellets are inserted into the briquette apparatus 4 in a state of containing at least one of zinc oxide, lead oxide, and titanium oxide. Therefore, the strength of the resultant briquettes is improved by the bonding action of at least one of zinc oxide, lead oxide, and titanium oxide. Therefore, the amount of the binder used can be decreased. The decrease in amount of the binder used leads to the prevention of material adhesion to the inner wall of equipment such as an intermediate hopper. In addition, when a reducing agent such as a carbonaceous material is mixed with the metal oxides, the strength of the briquettes is liable to be decreased, and thus the method of the present invention is particularly advantageous because strength can be improved by the effect of zinc oxide etc. contained.

### (2) Pellets as are formed

In a preferred embodiment of the present invention, it is recommended to insert the formed pellets into the briquette apparatus 4 as they are formed (pelletized) without classification by size. As described above, the pellets have large variation in grain size, and thus pellet grain sizes are usually made uniform by using a pellet sieve device. In the embodiment of the present invention, in an aggregate of pellets having large variation in diameter, smaller pellets enter the spaces between larger pellets, causing a state having a high bulk density and few voids. Such an aggregate of pellets can be compressed (briquetted) to form briquettes having a high bulk density and high strength. In addition, as described above, it is not necessary to install the pellet sieve device and to provide equipment for recycling the pellets which become unnecessary by classification.

After water is evaporated by a dryer 5, the briquettes formed as described above are charged in a rotary hearth furnace 6 and heated on a hearth to produce a reduced metal (reduced iron) by the action of the reducing agent (carbon). The rotary hearth furnace 6 is heated with a burner 7. In addition, zinc or lead evaporated by heating in the rotary hearth furnace 6 is recovered with a dust recovery device 8 (for example, provided with a bag-filter) and then recycled as a zinc raw material or lead raw material. The residual gas is exhausted through an exhaust fan 9. Further, a heat exchanger 10 is provided in an exhaust route so that the gas is effectively utilized as a heat source for hot wind to be supplied to the dryer 5 and the burner 7.

### EXAMPLES

Although the present invention is described in detail below by way of examples, the present invention is not limited to these examples and can be, of course, carried out with proper changes within a scope adaptable to the gist described above and below. These changes are included in the technical scope of the present invention.

### (EXAMPLE 1)

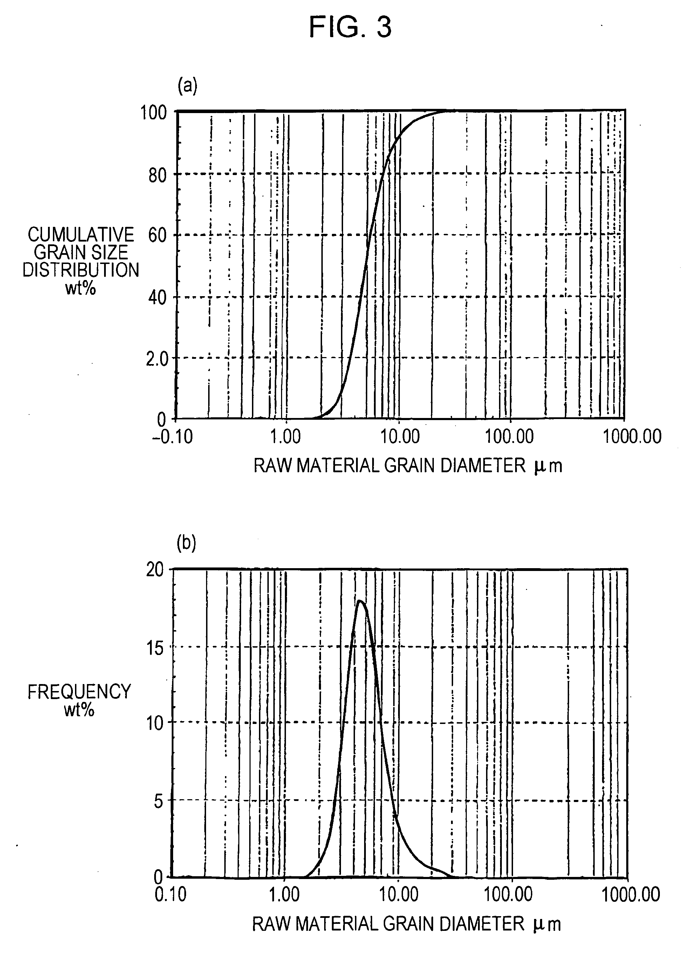

An electric furnace dust (may be simply referred to as a "dust raw material" hereinafter) having a total iron content of 22.7% by mass (may be simply referred to as "%" hereinafter), a zinc oxide content of 38.4% by mass, a lead oxide content of 2.1% by mass, and a titanium oxide content of 0.1% by mass was used as a steel-making dust material. The grain size distribution of the dust raw material is as shown in each of Figs. 3(a) and 3(b) and has a peak grain diameter of about 4.3 µm. In addition, the bulk density of the electric furnace dust raw material was 760 kg/m³. In addition, coke breeze (fixed carbon: 86%) was mixed as a reducing agent. The amount of the dust raw material mixed was 85.7%, and the amount of the coke breeze mixed was 14.3%.

In a raw material mixing step before a pelletizing step, the raw material was mixed for 5 minutes using a biaxial ribbon stirrer (manufactured by Chemical Engineering Co., Ltd.), and then 4% of water and 2% of a binder (molasses) were added to the raw material, followed by further mixing for 5 minutes. The stirrer had a container having a width of 45 cm, a length of 36 cm, and a height of 35 cm, and the rotational speed was 77 rpm.

In the pelletizing step, the mixed raw material was supplied to a pan pelletizer (manufactured by Maya Tokushu Kogyo Kabushiki Kaisha) having a diameter of 900 mm, a rim height of 160 mm, an inclination angle of 47°, and a rotational speed of 17 rpm while water was further added, thereby producing pellets. With respect to the grain size, the pellets included 15.2% of pellets having a diameter in the range of 3.0 to 6.0 mm, and 84.8% of pellets having a diameter in the range of 6.0 to 9.5 mm. The bulk density of the pellets was 1,390 kg/m³ (apparent density: 2,440 kg/m³) and increased from 760 kg/m³ at the stage of the raw material. In addition, the water content of the pellets was 10.8% by mass. Further, the pellets had a zinc oxide content of 32.9% by mass, a lead oxide content of 1.8% by mass, and a titanium oxide content of 0.09% by mass.

The pellets produced as described above were supplied to a briquetting machine with a screw feeder (manufactured by Shinto Kogyo Ltd., forming pressure: 160 kg/cm² (linear load, about 4 t/cm), roll rotational speed: 2.5 rpm) directly without being dezincified unlike in Patent Literature 2, and then compressed to form briquettes.

The apparent density of the briquettes produced as described above was 2,610 kg/m³. Although the briquettes are required to have strength such that powdering little occurs by transport in a stored state, the briquettes showed a satisfactory drop strength (the number of times of repeated dropping of briquettes from a height of 45 cm until the briquettes are broken) of 22. In addition, the crushing strength was 49 kN/P.

The briquettes were dried at 105°C for a night and day to further increase strength, and consequently the drop strength was 30. The drop strength of 30 is satisfactory from the viewpoint of the need for transport, storage, etc. of briquettes, and thus the drop test including over 30 times of dropping was not performed.

In addition, the crushing strength of the briquettes after drying was significantly improved to 765 kN/P. It was confirmed from this that the strength of briquettes is improved even by using the same amount of binder (2%) as in Comparative Examples 1 to 4 described below.

### (EXAMPLE 2)

Pellets were produced by the same method as in Example 1, and briquettes were formed from the pellets. A difference from Example 1 was that in Example 1, 4% of water and 2% of a binder (molasses) were mixed in the raw material mixing step before the pelletizing step, while in Example 2, 6% of water was mixed without using a binder.

With respect to the grain size, the produced pellets included 23.0% of pellets having a diameter in the range of 3.0 to 6.0 mm and 77.0% of pellets having a diameter in the range of 6.0 to 9.5 mm. Since the binder was not used in Example 2, the bulk density of the pellets was 1,360 kg/m³ (apparent density: 2,480 kg/m³) which value was slightly lower than that in Example 1 (1,390 kg/m³). However, the bulk density was sufficiently increased from 760 kg/m³ at the stage of the dust raw material. The water content of the pellets was 11.0% which was slightly higher than that in Example 1.

The apparent density of the briquettes produced in Example 2 was 2,650 kg/m³. Although, as described above, the briquettes are required to have such strength that powdering little occurs by transport in a stored state, the briquettes showed a satisfactory drop strength of 20. In addition, the crushing strength was 98 kN/P.

The briquettes were dried at 105°C for a night and day to further increase strength, and consequently the drop strength was 30. The drop strength of 30 is satisfactory from the viewpoint of the need for transport, storage, etc. of briquettes, and thus the drop test including over 30 times of dropping was not performed.

In addition, like in Example 1, the crushing strength of the briquettes after drying was significantly improved to 729 kN/P. It was confirmed from this that the strength of briquettes is improved without using the binder.

Although, in Examples 1 and 2, the raw material having a grain size distribution shown in Figs. 3(a) and 3(b) was used, it was found that the same effect can be achieved by using a raw material prepared by mixing an iron ore having an average grain diameter of about 100 micrometers with 5% by mass of zinc oxide. In addition, the results obtained with pellets having a diameter of 3.0 to 9.5 mm are shown, but the same effect can be achieved with pellets with a volume smaller than the size of a pocket of a pressure compaction machine because the pellets are satisfactorily received in the pocket.

Although the method including adding the reducing agent during pelletization is described, the method is not limited to this, and the reducing agent or the binder or both the reducing agent and the binder may be mixed after pelletization, followed by pressure compaction.

In addition, although, in Examples 1 and 2, the briquettes were dried by heating, the drying method is not limited, and through-flow drying (forced drying) or air drying (curing) may be performed. In addition, the water content after drying was decreased to 6% or less or a half or less of that before drying, and thus an improvement in strength was observed.

### (EXAMPLE 3)

Pellets were produced by the same method as in Example 2, and briquettes were formed from the pellets. A difference from Example 2 was that the type of steel-making dust used as the raw material was variously changed.

Table 1 shows the results of the same experiment as in Example 2 using 13 different types of dust raw materials.

**[Table 1]**

| Test of Example 3 (passing through pellets) | | | | | | | | | | | | | | |
|---|---|---|---|---|---|---|---|---|---|---|---|---|---|---|
| Dust raw material No. | | 1 | 2 | 3 | 4 | 5 | 6 | 7 | 8 | 9 | 10 | 11 | 12 | 13 |
| Dust bulk density | Kg/m³ | 1010 | 820 | 980 | 670 | 1030 | 1170 | 750 | 1030 | 790 | 830 | 1040 | - | - |
| Iron oxide | % by mass | 19.0 | 22.9 | 27.0 | 14.9 | 26.8 | 19.4 | 19.1 | 23.2 | 23.9 | 24.6 | 15.7 | 38.9 | 42.8 |
| (a) Zinc oxide | % by mass | 26.7 | 23.4 | 14.8 | 19.9 | 15.1 | 18.2 | 17.4 | 24.3 | 24.7 | 20.6 | 34.9 | 9.4 | 4.7 |
| (b) Lead oxide | % by mass | 0.2 | 0.3 | 1.5 | 1.0 | 0.6 | 0.8 | 1.4 | 0.2 | 1.8 | 1.8 | 0.2 | 0.7 | 0.4 |
| (c) Titanium oxide | % by mass | 0.1 | 0.1 | 0.1 | 0.1 | 0.1 | 0.1 | 0.1 | 0.1 | 0.1 | 0.1 | 0.1 | 0.0 | 0.0 |
| (a)+(b)+(c) | % by mass | 27.0 | 23.8 | 16.4 | 20.9 | 15.8 | 19.1 | 18.8 | 24.6 | 26.5 | 22.4 | 35.2 | 10.1 | 5.1 |
| Agglomerates | | 1 | 2 | 3 | 4 | 5 | 6 | 7 | 8 | 9 | 10 | 11 | 12 | 13 |
| Apparent density before drying | Kg/m³ | 2910 | 2960 | 2820 | 2890 | 2980 | 2960 | 2790 | 3000 | 3120 | 3040 | 3080 | 2610 | 2530 |
| Drop strength before drying | Number of times | 30 | 30 | 9 | 30 | 29 | 30 | 30 | 30 | 30 | 24 | 30 | 3 | 1 |
| Drop strength after drying | Number of times | 30 | 30 | 30 | 30 | 30 | 30 | 30 | 30 | 30 | 30 | 30 | 10 | 6 |

Table 1 indicates that by using a powder of metal oxides including at least one of zinc oxide, lead oxide, and titanium oxide, regardless of the type of the dust raw material, the briquettes after drying show a drop strength of 6 or more and thus show a strength of 3 or more which causes no problem in transport, without using the binder.

Further, when the briquettes contain 10% by mass or more of zinc oxide, lead oxide, and titanium oxide, the briquettes after drying show a drop strength of 10 or more and are sufficiently increased in strength. In addition, even before drying, the briquettes show a strength of 3 or more which causes no problem in transport.

### (EXAMPLE 4)

The pellets which were partially left out of the pellets experimentally produced in Example 2 were air-dried for 7 days and then used for producing briquettes. As a result of measurement of the water content of the pellets before briquetting, the water content was 6.7% by mass. The apparent density of the produced briquettes was 2,830 kg/m³. The briquettes showed a drop strength of 8 on average and showed strength causing no problem in transport. In addition, the crushing strength was 303 kN/P.

The briquettes were dried at 105°C for a night and day to further improve strength and, consequently, the drop strength was 30. Like in Examples 1 to 3, the drop strength of 30 is satisfactory from the viewpoint of the need for transport, storage, etc. of briquettes, and thus the drop test including over 30 times of dropping was not performed. In addition, the crushing strength of the briquettes after drying was significantly improved to 1416 kN/P.

Further, as a result of observation of the inside of the briquette apparatus after briquetting, substantially no adhesion of the material was observed in the apparatus (in Example 2, slight adhesion was observed).

### (EXAMPLE 5)

Pellets were produced under the same conditions as in Example 2, and briquettes were formed from the pellets. The reducing agent used was different from that in Example 2. Coal (fixed carbon 61.6% by mass) having a volatile content of 28.0% by mass was used as the reducing agent. The amount of the dust raw material mixed was 80.9% by mass, and the amount of the coal mixed was 19.1% by mass.

With respect to the grain size, the pellets included 21.4% of pellets having a diameter in the range of 3.0 to 6.0 mm, and 78.6% of pellets having a diameter in the range of 6.0 to 9.5 mm. The bulk density of the pellets was increased to 1,290 kg/m³. In addition, the water content of the pellets was 12.7% by mass. The apparent density of briquettes formed from the pellets was 2,330 kg/m³. The briquettes showed a drop strength of 14 on average and showed strength causing no problem in transport. In addition, the crushing strength was 122 kN/P.

The briquettes were dried at 105°C for a night and day to further increase strength, and consequently the drop strength was 19 on average. In addition, the crushing strength of the briquettes after drying was significantly improved to 1,031 kN/P. It was thus confirmed that the strength of briquettes is sufficiently improved even by using coal having a high volatile content.

### (EXAMPLE 6)

Pellets were produced under the same conditions as in Example 2, and briquettes were formed from the pellets. The reducing agent used was different from that in Example 2. Coal (fixed carbon 51.9% by mass) having a volatile content of 43.6% by mass was used as the reducing agent. The amount of the dust raw material mixed was 78.1% by mass, and the amount of the coal mixed was 21.9% by mass.

With respect to the gain size, the pellets included 31.6% of pellets having a diameter in the range of 3.0 to 6.0 mm, and 68.4% of pellets having a diameter in the range of 6.0 to 9.5 mm. The bulk density of the pellets was increased to 1,280 kg/m³. In addition, the water content of the pellets was 12.1% by mass. The apparent density of briquettes formed from the pellets was 2,170 kg/m³. The briquettes showed a drop strength of 4 on average and showed strength causing no problem in transport. In addition, the crushing strength was 113 kN/P.

The briquettes were dried at 105°C for a night and day to further increase strength, and consequently the drop strength was 15 on average. In addition, the crushing strength of the briquettes after drying was significantly improved to 575 kN/P. It was thus confirmed from this example that the strength of briquettes is sufficiently improved even by using coal having a high volatile content.

### (EXAMPLE 7)

In Examples 1 to 6, the test including first pelletizing the dust raw material and then briquetting the pellets is described. However, in this reference example, briquetting was performed instead of pelletizing. That is, briquettes were formed directly from a mixture of a dust raw material, a reducing agent, and a binder by two times of pressure compaction. As a result, the apparent density of briquettes was 2,300 kg/m³ on average, and a drop strength of 30 was achieved before and after drying of the briquettes. In this example, 12% by mass of molasses was mixed as the binder.

### (COMPARATIVE EXAMPLE 1)

A test was conducted by briquetting using the 13 types of dust raw materials used in Example 3. However, in the test of Comparative Example 1, briquettes were formed directly from each of dust raw materials without the formation of pellets from each dust raw material. The conditions used were the same as in Example 3 except that the pelletizing step was omitted. As a result, the briquettes were formed from all types of dust raw materials, but the briquettes were quite brittle and thus made it impossible even to perform a physical property test for drop strength, etc. as shown in Table 2.

**[Table 2]**

| Test of Comparative Example 1 (not passing through pellets) | | | | | | | | | | | | | | |
|---|---|---|---|---|---|---|---|---|---|---|---|---|---|---|
| Dust raw material No. | | 1 | 2 | 3 | 4 | 5 | 6 | 7 | 8 | 9 | 10 | 11 | 12 | 13 |
| Dust bulk density | Kg/m³ | 1010 | 820 | 980 | 670 | 1030 | 1170 | 750 | 1030 | 790 | 830 | 1040 | - | - |
| Iron oxide | % by mass | 19.0 | 22.9 | 27.0 | 14.9 | 26.8 | 19.4 | 19.1 | 23.2 | 23.9 | 24.6 | 15.7 | 38.9 | 42.8 |
| (a) Zinc oxide | % by mass | 26.7 | 23.4 | 14.8 | 19.9 | 15.1 | 18.2 | 17.4 | 24.3 | 24.7 | 20.6 | 34.9 | 9.4 | 4.7 |
| (b) Lead oxide | % by mass | 0.2 | 0.3 | 1.5 | 1.0 | 0.6 | 0.8 | 1.4 | 0.2 | 1.8 | 1.8 | 0.2 | 0.7 | 0.4 |
| (c) Titanium oxide | % by mass | 0.1 | 0.1 | 0.1 | 0.1 | 0.1 | 0.1 | 0.1 | 0.1 | 0.1 | 0.1 | 0.1 | 0.0 | 0.0 |
| (a)+(b)+(c) | % by mass | 27.0 | 23.8 | 16.4 | 20.9 | 15.8 | 19.1 | 18.8 | 24.6 | 26.5 | 22.4 | 35.2 | 10.1 | 5.1 |
| Agglomerates | | 1 | 2 | 3 | 4 | 5 | 6 | 7 | 8 | 9 | 10 | 11 | 12 | 13 |
| Apparent density before drying | Kg/m³ | Unmeasurable due to insufficient strength | | | | | | | | | | | | |
| Drop strength before drying | Number of times | | | | | | | | | | | | | |
| Drop strength after drying | Number of times | | | | | | | | | | | | | |

### (COMPARATIVE EXAMPLE 2)

In Comparative Example 2, the same test as in Comparative Example 1 was conducted. That is, briquettes were formed directly from the dust raw material without the formation of pellets from the dust raw material. This comparative example was different from Comparative Example 1 in that like in Example 1, 2% of a binder (molasses) was used. In Comparative Example 2, the bulk density of the dust raw material mixed with the reducing agent and the binder was slightly increased to 800 kg/m³, but briquettes formed as a result of supply of the mixture to a briquetting machine with a screw feeder (under the same conditions as in Examples 1 to 6 and Comparative Example 1) were quite brittle and thus made it impossible even to perform the physical property test for drop strength etc.

### (COMPARATIVE EXAMPLE 3)

In Comparative Example 3, a test was conducted using the same composition as in Comparative Example 2. A difference from Comparative Example 2 was as follows. It was considered that in Comparative Example 2, the raw material dust, the recuing agent, and the binder were likely to be not sufficiently mixed, and thus the mixing time after the addition of 4% of water and 2% of the binder (molasses) was extended to 30 minutes. After the mixing, the bulk density of the raw material was slightly increased to 810 kg/m³ as compared with Comparative Example 2. Like in Comparative Example 2, the mixture was supplied to a briquetting machine with a screw feeder (under the same conditions as in Examples 1 to 6 and Comparative Examples 1 and 2) without passing through pellets. As a result, like in Comparative Example 2, the briquettes were formed but were quite brittle, thereby making it impossible even to perform the physical property test for drop strength etc. Therefore, the extension of the mixing time did not result in a significant improvement in strength.

### (COMPARATIVE EXAMPLE 4)

In Comparative Example 4, the test was conducted using the same composition as in Comparative Example 2. However, instead of the biaxial ribbon stirrer (the mixer used in Examples 1 to 3 and Comparative Examples 1 to 3), a mix Muller mixer with a higher kneading ability (container size: diameter 254 mm x width 73 mm, compression load: 181 to 275 N, spring weighting system, rotational speed: 44 rpm) was used. The composition and mixing procedures of the raw material dust were the same as in Comparative Example 2.

That is, 85.7% of a fine powder of dust raw material and 14.3% of coke breeze were mixed for 5 minutes using a biaxial ribbon stirrer, and 4% of water and 2% of the binder (molasses) were added to the resultant mixture, followed by further mixing for 5 minutes. After the mixing, the bulk density of the dust raw material was slightly increased to 1010 kg/m³. The mixture was further mixed for 15 minutes using the mix Muller mixer. Then, the mixture was supplied to a briquetting machine with a screw feeder (under the same conditions as in Example 1) without passing through pellets. As a result, like in Comparative Examples 2 and 3, the briquettes formed were quite brittle and thus made it impossible even to perform the physical property test for drop strength etc. Therefore, the use of the mix Muller mixer with a higher kneading ability did not resulted in a significant improvement in strength.

### [EXAMPLE 8]

Under the same conditions as in Example 2, pellets were produced, and briquettes were formed from the pellets. Further, the briquettes were dried at 105°C for a night and day. The water content of the pellets used was different from in Example 2. Table 3 indicates that in Test A, the pellet water content is 7.8% by mass, while in Test B, the pellet water content is 9.6% by mass.

**[Table 3]**

| | | Test A | Test B |
|---|---|---|---|
| Pellet | Water content [% by mass] | 7.8 | 9.6 |
| | Apparent density [kg/m³] | 1870 | 2270 |
| Briquette (undried) | Apparent density [kg/m³] | 2260 | 2680 |
| | Drop strength [number of times] | 0.5 | 6.4 |
| Briquette (after drying) | Apparent density [kg/m³] | 2130 | 2470 |
| | Drop strength [number of times] | 7.6 | 26.8 |

As shown in Table 3, in Test A with the pellets having a relatively low water content, the drop strength of briquettes (raw briquettes) in an undried state was a value of as low as 0.5, but the briquettes after drying show a strength of 7.6 causing no problem in transport. In addition, in Test B in which the water content was increased to 9.6% by mass, both the raw briquettes and the dry briquettes show good drop strength. In Test A and Test B, the apparent density of the pellets is 1,000 kg/m³ or more. Therefore, it was found that the strength of briquettes is improved by briquetting after increasing the apparent density of the pellets to 1,000 kg/m³ or more.

### [EXAMPLE 9]

In Example 9, pellets were formed under the same mixing conditions as in Example 8 except that the reducing agent was not mixed. The pellets were ground into a size with a diameter of 2 to 3 mm, and then mixed with the reducing agent, 3% of water, and the binder (molasses). The resultant mixture was supplied to a briquetting machine with a screw feeder (under the same conditions as in Examples 1 to 6 and Comparative Example 1). As a result, the briquettes were formed with the molasses added in an amount of 1%, but the formed briquettes were quite brittle and thus made it impossible even to perform the physical property test for drop strength etc. With the molasses added in an amount increased to 4%, the apparent density of the raw briquettes was 2810 kg/m³, and the drop strength was 16 on average.

Although the examples and the comparative examples of the present invention are described above, in any of the examples, the apparent density of the pellets and the apparent density of the briquettes were measured according to the measurement method specified in JIS M8719 "Iron Ore Pellets - Determination of Volume".

This application is described in detail with reference to the specified embodiments, but it is obvious to a person skilled in the art that various changes and modification can be added without deviating from the spirit and scope of the present invention.
This application is based on Japanese Patent Application No. 2009-225053 filed September 29, 2009, the entire contents of which are incorporated herein by reference.

### Industrial Applicability

According to the present invention, at least one of zinc oxide, lead oxide, and titanium oxide is contained in metal oxides, and thus at least one of zinc oxide, and lead oxide, and titanium oxide functions as a binder of a raw material containing the metal oxides, thereby eliminating the need to use a large amount of a binder such as molasses before forming of a secondary granular material. This permits the secondary granular material with high strength to be efficiently produced without complicating the equipment. In addition, the apparent density of a primary granular material is enhanced, and thus the raw material is sufficiently compacted by subsequent pressure compaction, thereby increasing the strength of the secondary granular material.

### Reference Signs List

- 1: storage house
- 2: mixer
- 3: pan-type granulator
- 4: briquette apparatus
- 5: dryer
- 6: rotary hearth furnace
- 7: burner
- 8: dust recovery device
- 9: exhaust fan
- 10: heat exchanger

## Claims

1. A method for producing briquettes, the method comprising a step of forming a primary granular material with an apparent density of 1,000 to 4,000 kg/m³ using a powder of metal oxides including iron oxide and at least one of zinc oxide, lead oxide, and titanium oxide, and a step of forming a secondary granular material by pressing a plurality of the primary granular materials under a condition in which the primary granular materials contain at least one of zinc oxide, lead oxide, and titanium oxide.

2. The method for producing briquettes according to Claim 1, wherein the primary granular material is formed by tumbling granulation, kneading granulation, or pressure compaction.

3. The method for producing briquettes according to Claim 1, wherein the total content of at least one of zinc oxide, lead oxide, and titanium oxide is 10% by mass or more of the secondary granular material.

4. The method for producing briquettes according to Claim 1, wherein the primary granular material contains a reducing agent.

5. The method for producing briquettes according to Claim 1, wherein the primary granular material contains water.

6. The method for producing briquettes according to Claim 5, wherein the primary granular material is pressed at a water content of 4 to 20% by mass.

7. The method for producing briquettes according to Claim 5, further comprising a step of drying the primary granular material before forming the secondary granular material.

8. The method for producing briquettes according to Claim 7, wherein the water content of the primary granular material is decreased by drying to 50 to 95% by mass of that before drying.

9. The method for producing briquettes according to Claim 2, wherein the primary granular material is formed by allowing the metal oxides to stay in a tumbling granulator for 15 seconds or more.

10. The method for producing briquettes according to Claim 1, further comprising a step of drying the secondary granular material.

11. The method for producing briquettes according to Claim 1, wherein the volume of the primary granular material is 1/500 or more of the inner volume of a die for forming the secondary granular material.

12. A method for producing a reduced metal, the method comprising a step of reducing briquettes produced by the method according to any one of Claims 1 to 11.

13. A method for separating zinc, the method comprising a step of evaporating zinc by heating and reduction of briquettes containing zinc oxide and produced by the method according to any one of Claims 1 to 11.

14. A method for separating lead, the method comprising a step of evaporating lead by heating or heating and reduction of briquettes containing lead oxide and produced by the method according to any one of Claims 1 to 11.
